# EUROPEAN PATENT SPECIFICATION

(11) **EP 0 365 254 B1**
(45) Date of publication and mention of the grant of the patent: **01.05.1996**
(21) Application number: 89310592.4
(22) Date of filing: 16.10.1989
(51) Int. Cl.: G06F 3/12, G06K 15/02

(54) **Memory device for a page printer**
Seitendrucker-Speichervorrichtung
Dispositif de mémoire pour une imprimante de page

(30) Priority: 17.10.1988 JP 260899/88
(43) Date of publication of application: 25.04.1990
(73) Proprietor: SEIKO EPSON CORPORATION, Shinjuku-ku Tokyo-to (JP)
(72) Inventor: Maruyama, Michio, Suwa-shi Nagano-ken (JP)
(74) Representative: Sturt, Clifford Mark

(56) References cited:
- US-A- 3 742 458
- US-A- 4 573 119
- US-A- 4 866 671
- PATENT ABSTRACTS OF JAPAN vol. 11, no. 12 (P-535)13 January 1987 & JP-A-61 187 033 ( CITIZEN WATCH CO LTD ) 20 August 1986

## Description

The present invention relates to a printer device of the kind that forms print by scanning a photosensitive drum with a light beam modulated with print data.

A conventional page printer forms print based on the principle of xerography, (Xerox is a trade mark) and is capable of printing not only characters but also figures whilst maintaining a very high quality. In order to print a mixture of characters and figures on the same page, the data for printing the characters and the data for printing the images must be combined together.

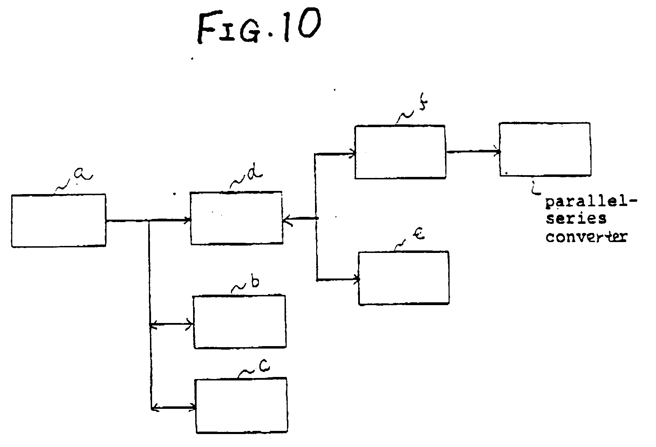

For this purpose, the conventional page printer comprises, as shown in Figure 10, a central processing unit a which operates according to a control program, a program ROM b which stores a program for controlling the printing steps, a font ROM c which stores character pattern data, a work memory e connected to the central processing unit via a memory control circuit d, and a two-port memory f which stores image data and which processes the print data taking each bit as a unit.

When the image data is stored in the image data memory f, the character pattern data is read from the font ROM c by the central processing unit a and is sent to the image data memory, where the image data and the character pattern data are superposed upon each other at high speeds. Further, the image data memory f is capable of processing the data with a bit as a unit, and can shift the print data formed in the image data memory to adjust the printing position finely and at high speeds.

Although various processing for the print data can be achieved, the image data memory must be a two port memory having an input port and an output port independent of one another. Such a memory is expensive, which increases the overall cost of the device.

Further, the work memory is a one-port memory and is of a different type from the image data memory. Hence, the two memories must be handled as independent memories, and idle capacities cannot be shared between them, which diminishes their utilization and their efficiency.

The page printer forms images using very small dots, enabling some of the print data to be picked up and copied elsewhere.

Such a copying process requires a form of processing which prevents the data to be copied from being affected by the data already present in the region where the copy is to be made. Since the processing is carried out by means of software using a central processing unit, an extended period of time is required for the copying process, and so the high-speed printing performance of the page printer is not utilised.

US 4573119 discloses a digital computing system with a central processing unit (CPU) and random access memory (RAM). An operation code detector detects a unique operation code stored in the RAM and fetched by the CPU, and puts out a signal when the unique operation code is detected. An address latch stores a high and a low digital boundary address put out by the CPU when the address latch is enabled by the signal from the operation code detector. An address comparator compares digital address subsequently put out by the CPU with the stored boundary address and puts out a signal as the result of the comparison. The address comparator signal controls a switch which enables or disables an address transformer and a bi-directional data transformer.

The present invention provides a printer device including a memory and a central processing unit for processing the print data said printer device being characterised by a main memory consisting of a first memory region and another memory region, first and second memory means for storing data representing a head address and a tail address received via a data bus of said central processing unit, first and second comparator means for comparing the head address data and the tail address data stored in said first and second memory means with address data received via an address bus of said central processing unit, and means for accessing either said first memory region of the main memory specified by said head address and said tail address, the first memory region being an image data processing memory region, or said other memory region of the main memory, said other memory region being a work memory region in response to a signal from said comparator means, wherein access to the other memory region is blocked when said first memory region is accessed, and access to the first memory region is blocked when said other memory region is accessed.

A single one-port random access memory may be employed for the main memory.

Thus, both a work memory and an image data processing memory may be provided by dividing the same memory into two memory regions.

The same one-port random access memory may therefore be divided into a work memory region and an image data processing memory region, the data from the work region being transferred to the image data processing memory region in use. Thus the memory may be divided depending upon the print data, and may be effectively utilized.

Advantageously, such a memory device processes the data to be transferred with a bit as a unit in order to carry out high-speed processing.

The present invention will be described further, by way of example with reference to the accompanying drawings, in which:-
Figure 1 is a diagram illustrating the contruction of a page printer to which the present invention is applied;
Figure 2 is a block diagram illustrating a memory device according to the present invention;
Figure 3 is a block diagram illustrating one embodiement of a memory controller of the above memory device;
Figure 4 is a schematic diagram illustrating the structure of a memory of the above memory device;
Figure 5 is a block diagram illustrating one embodiment of a circuit for effecting division of the memory into a work memory region and an image data processing memory region;
Figure 6 is a block diagram illustrating one embodiment of a masking circuit of the above memory device;
Figures 7 and 8 are tables for data produced from step decoders of the masking circuit;

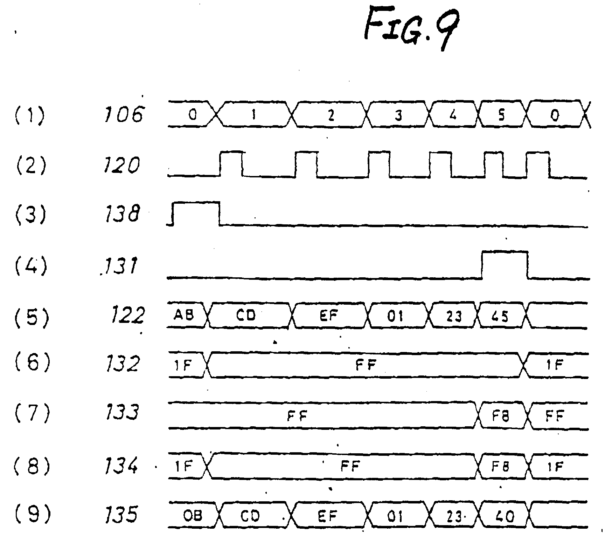

Figure 9 is a timing chart for explaining the operation of the device; and
Figure 10 is a block diagram illustrating a conventional image processor for a page printer.

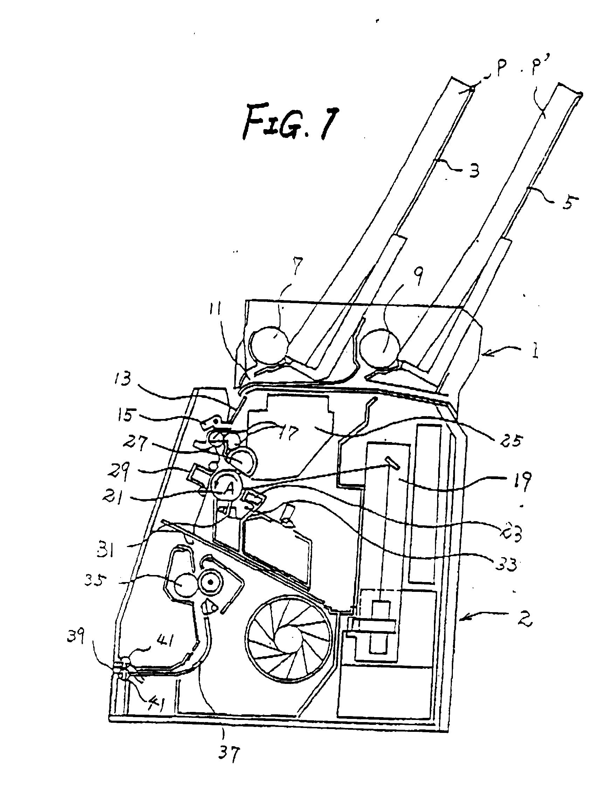

Figure 1 illustrates a printing mechanism of a page printer to which the present invention is applied. A paper feed device is detachably mounted on an upper portion of a page printer body 2, and is provided with stackers 3, 5 for stacking printing paper P, P′ of two dissimilar sizes and with pick-up rollers 7, 9 for taking the printing paper sheet by sheet from the stackers 3 and 5 respectively. The printing paper is fed from a paper exit port 11 of the paper feed device 1 to a paper feed port 13 of the printer body 2.

Under the paper feed port 13, there is disposed a paper detector 15, which detects whether a sheet of paper P to be printed is set or not, and under this there is a pair of gate rollers 17 for placing the leading edge of the sheet of paper at a predetermined position and feeding the sheet to a printing mechanism (described below).

Downstream of the pair of gate rollers 17 is a photosensitive drum 21, which is arranged to rotate in a direction (shown by arrow A in Figure 1) to move the printing paper downwards and which is in the path of a light beam from a light beam control mechanism 19, the light beam control mechanism 19 receiving data from a memory as will be described later and converting it into the light beam. An electrostatic field generator 23, a toner sleeve 27 of a developing device 25, a transfer device 29, a toner recovering device 31 and an eraser 33 are all arranged about the periphery of the photosensitive drum 21. Furthermore a fixing device 35 is arranged under the photosensitive drum 21 to fix the toner transferred to the paper P.

Paper exit rollers are provided under the fixing device to feed the printing paper P by way of a fixed guide plate 37 out of the page printer through a paper exit port 39.

When the print instruction is generated, sheets of the printing paper P stacked in the stackers 3, 5 of the paper feed device 1 are fed by the pick-up rollers 7, 9 to the paper feed port 13 and are held at their leading edges by the gate rollers 17.

Each sheet of the printing paper P is then fed further until the paper detector 15 is actuated. In response to a signal from the paper detector 15, the gate rollers 17 rotate in synchronism with the photosensitive drum 21 so that the printing paper is fed towards the drum 21. The transfer device 29 effects the transfer of toner by applying an electrostatic field to the printing paper such that toner on the surface of the photosensitive drum 21 is attracted by the printing paper P. The transferred toner is caused to adhere to the printing paper P by thermal melt adhesion as the paper passes through the fixing device 35.

After leaving the fixing device 35, the printing paper P is guided by the fixed guide plate 37 to the paper exit rollers 41 and is discharged out of the page printer through a paper exit port 39.

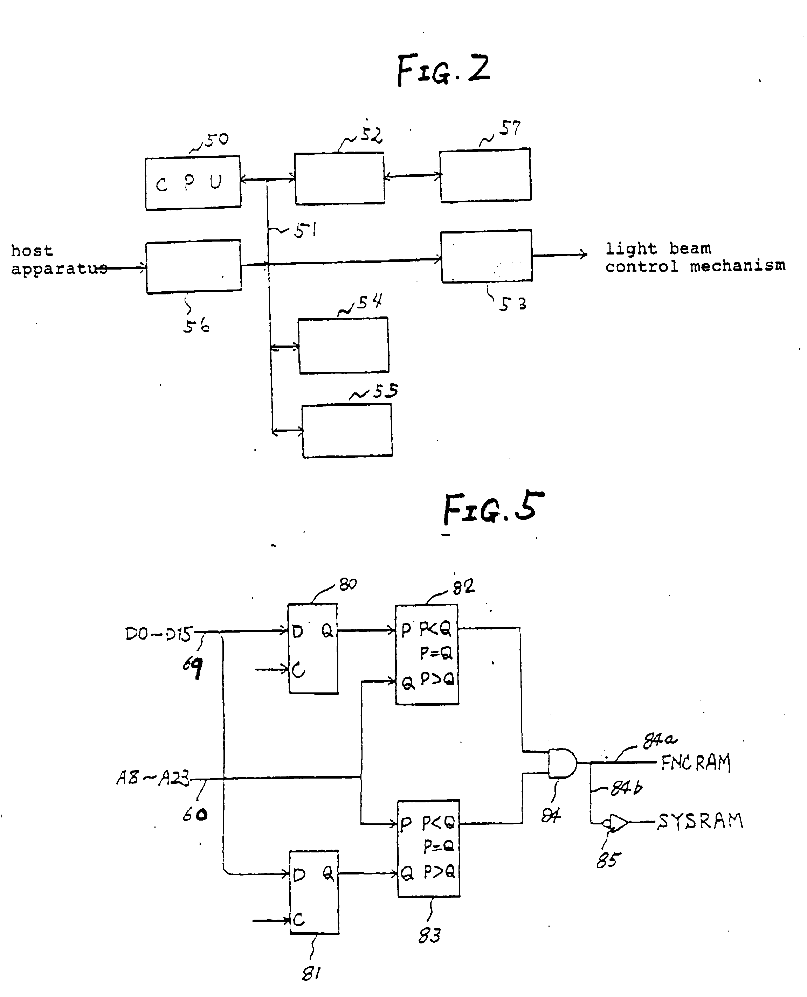

Figure 2 showns schematically the data processing circuitry employed with the above-mentioned page printer.

A central processing unit 50 is designed so as to provide continuous access to memory space in a non-segmentation system, and is connected via a bus 51, to a memory control circuit 52, a parallel-series converter 53, a program ROM 54 storing a work program and a font ROM 55 storing character pattern data. The central processing unit 50 sends print data from a host apparatus, to which it is connected via a communication control circuit 56, to an image data write mechanism including the light beam control mechanism 19, by way of the converter.

A one-port random access memory 57 (hereinafter simply referred to as a memory) is connected to the central processing unit 50 via the memory control circuit 52 and provides an image processing memory region and a work memory region.

Figure 3 illustrates one embodiment of a memory-region dividing circuit consituting a portion of the memory control circuit 52 and including an address select circuit 61, which defines a work memory region and an image data processing memory region in dependence on an output from central processing unit 50 and which produces image data processing memory signals and work memory signals so as to variably maintain a storage capacity necessary for processing the image data. A mediation circuit 62 determines the allotment of the image data processing memory region and the work memory region. Upon receipt of a signal from the mediation circuit 62, a timing generator 63 generates a timing signal that initiates access to the image data processing memory region and the work memory region.

A register 64 stores an add address produced from the central processing unit 50 on a data bus 69, and a signal therefrom is applied to an adder circuit 65 where the signal is added to a signal from the central processing unit 50 on an address bus 60 for input to one terminal 66a of an address select circuit 66. The signal on the address bus 60 is also input directly to the other terminal 66b of the address select circuit 66. In response to a signal from the timing generator 63, the address select circuit 66 selects an address according to the signal at one of its terminals, and accesses the memory 57 based on the address that is selected.

The image data thus read out from the memory 57 is transmitted to the data bus 69 via a data bus 70. The data supplied to the data bus 69 is input to the parallel-series converter 53 via a bus 71.

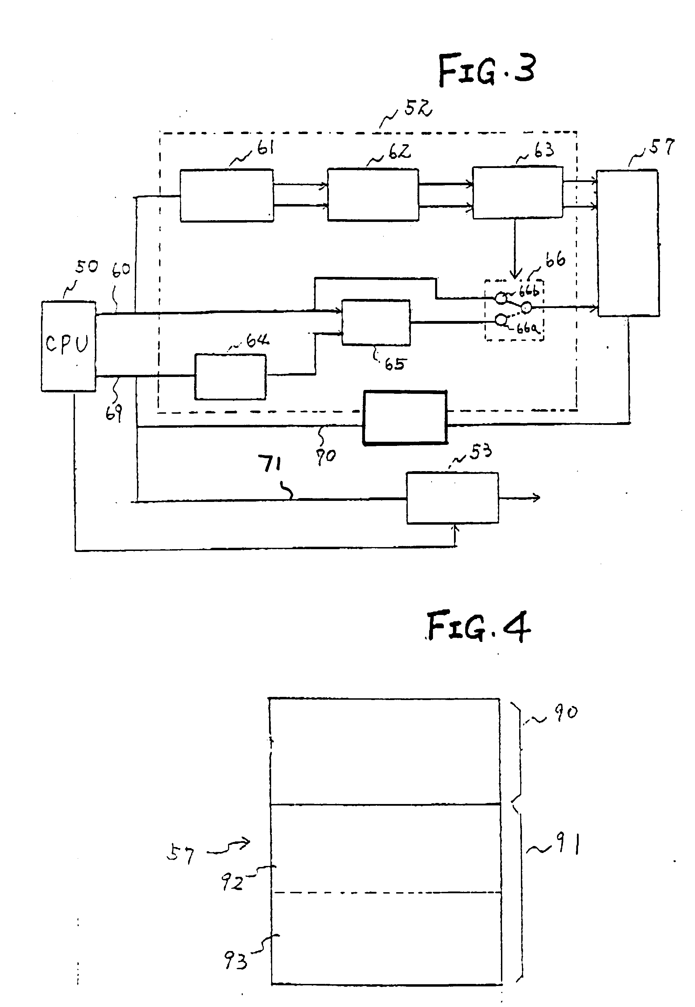

In this instance the memory 57 is divided into a work memory region 90 and an image data processing memory region 91 as shown in Figure 4 with the image data processing memory region 91 comprising at least two small memory portions 92 and 93 having storage capacities such that no delay develops in the printing steps in the page printer.

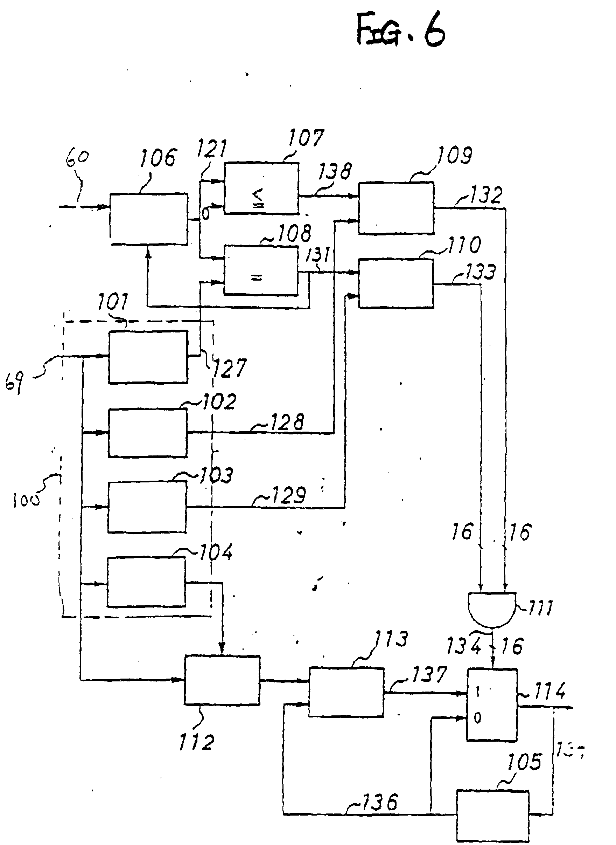

Figure 5 illustrates the address select circuit 61 of Figure 3 which forms a portion of the memory control circuit for dividing the memory 57 into regions and which comprises first and second memory circuits 80 and 81 provided with a D-terminal connected to the data bus 69 from the central processing unit 50 and with a C-terminal.

The first memory circuit 80 receives through the D-terminal a head address for the image data processing memory region sent from the data bus 69.

The second memory circuit 81 received through the D-terminal a tail address for the image data processing memory region sent from the data bus 69.

A first comparator circuit 82 has a P-terminal for receiving the data from the first memory circuit 80 and a Q-terminal for receiving the address data from the address bus 60 of the central processing unit. The circuit 82 produces a signal "1" when a value for the data at the Q-terminal is greater than a value for the data at the P-terminal (P < Q).

A second comparator circuit 83 has a Q-terminal for receiving the data from the second memory circuit 81 and a P-terminal for receiving the data from the address bus 60 of the central processing unit, and produces a signal "1" when a value for the data at the Q-terminal becomes greater than a value for the data at the P-terminal (P < Q).

Upon receipt of an address of the image data processing memory region set by external input means such as a keyboard or the like, the central processing unit 50 sends the address data to the first and second memory circuits 80 and 81 via the data bus 69. The first memory circuit 80 stores the head address of the image data processing memory region and the second memory circuit 81 stores the tail address of the image data processing memory region.

Address data from the address bus 60 of the central processing unit is input to the first and second comparator circuits 82 and 83, and is compared with the addresses stored in the first and second memory circuits 80 and 81.

When the address data that is input is within the range of data stored in the first and second memory circuits 80, 81, the comparator circuits 82 and 83 each produce the signal "1". An AND circuit 84 receives the signals from the first and second comparator circuits 82 and 83, and produces the signal "1" to access the image data processing memory region in the memory 57.

On the other hand, when the address data transmitted on the address bus 60 lies outside the range of data stored in the first and second memory circuits 80 and 81, at least one of the first and second comparator circuits 82 and 83 produces the signal "0". The AND circuit 84 then supplies the signal "0" to access the work memory region in the memory 57.

Now, the output terminal of the AND circuit 84 branches into two leads 84a and 84b, one lead 84a being connected directly to an image data processing memory region access terminal of the memory 57 and the other lead 84b being connected via an inverter 85 to a work memory region access terminal of the memory 57.

Therefore, when the address data transmitted on the address bus 60 signifies an address that lies within the image data processing memory region, the AND circuit 84 produces the signal "1" which provides access to the image data processing memory region of the memory 57. The signal "1" is inverted by the inverter 85 to supply a signal "0" so that no access is provided to the work memory region.

Equally when the address data produced on the address bus 60 lies outside the range of data stored in the first and second memory circuits 80 and 81, at least one of the first and second comparator circuits 82 and 83 produces the signal "0" as described earlier, and the AND circuit 84 produces a signal "0" which is input via the inverter 85 to the work memory region access terminal, thereby providing access to the work memory region of the memory 57 and blocking access from the image data processing memory region.

Depending upon the kind of image data to be printed, it may become necessary to maintain in the memory 57 an image data processing memory region having a large capacity.

In such a case, if the necessary capacity is instructed from the external data input means by means of a head address and a tail address for the image data processing memory region, the address data is then stored in the first and second memory circuits 80 and 81 in order to maintain the image data processing memory region at the required capacity.

Upon receipt of a print data transfer request from the light beam write control mechanism 19 (Figure 1) under the condition where the image data processing memory region is maintained, the central processing unit 50 provides access to the image data processing memory region in the memory 57 via the memory control circuit 52.

The parallel-series converter circuit 53 detects the moment at which the central processing unit 50 produces address data on the address bus 60, and reads the data on the data bus 69 after a predetermined period of time has elapsed following such detection, i.e., after the data is read out from the memory 57 by the central processing unit 50.

The data is produced from the memory 57 to the central processing unit 50 in parallel form on the data bus 69, and the parallel-series converter circuit 53 latches the image data being produced on the data bus 69 in parallel form and converts the data into a serial form for transmission to the light beam write control mechanism 19 (Figure 1). At the moment when the data is produced from the memory 57 on the data bus 69 of the central processing unit 50 as described above, the parallel-series converter 53 latches such data, without the need for waiting for the transfer of data from the central processing unit 50, to provide data of a serial form necessary for operating the page printer. Therefore, the data can be transferred at high speeds from the print data buffer to the page printer, and the image data can be processed at high speeds without using an expensive two-port memory.

A circuit 200 (Figure 3) carries an erasing circuit, a memory bus control circuit and a masking circuit (Figure 6) and monitors the moment at which the reading of the first portion 92 of the image data processing memory region 91 is finished, and sends either a signal "0" or a signal "1" to the first portion at the moment when the reading is finished.

Without the need for waiting for an erase instructio from the central processing unit, therefore, the data that has become unnecessary is successively erased from the image data processing memory region, i.e. the erase processing is effected at a high speed.

The central processing unit 50 transfers the data in the work memory region of the first portion. When a next transfer request is produced from the page printer, the central processing unit 50 enables the address select circuit 61 to designate a head address of the second portion 93 such that the data of the second portion is produced on the data bus 69. The data of parallel form on the data bus 69 is then converted into data of serial form in the same manner described above, and is sent to the page printer.

As described above, the data is transferred while alternating between the two memory portions having a small memory capacity and, hence, the memory capacity is saved and the memory is efficiently used.

The idle portion of the image data processing memory region is used for storing charater code data from the host equipment. With the character code data being stored in the memory in advance as described above, the printing speed can be increased without the need for waiting for the transfer of data from the host equipment.

Figure 6 shows an embodiment of a masking circuit having a group of registers generally designated 100. A first register 101 sets a bit number for continuously producing signals "0" from the most significant bit towards the least significant bit in one byte of the data stored in the work memory region of the memory 57. A second register 102 sets the mask quantity of the left hand side of the image data in terms of a bit number, and a third register 103 sets the mask quantity on the right hand side of the image data in terms of a bit number.

By way of example, five transfer bytes are set into the register 101, three bits representing the mask width of the left hand side are set into the register 102, four bits representing the mask width of the right hand side are set into the register 103, and a zero shift quantity is set into the register 104.

A counter 106 counts the amount of data transferred from the work memory region of the memory 57 with the byte as a unit, being set to zero in the initial condition.

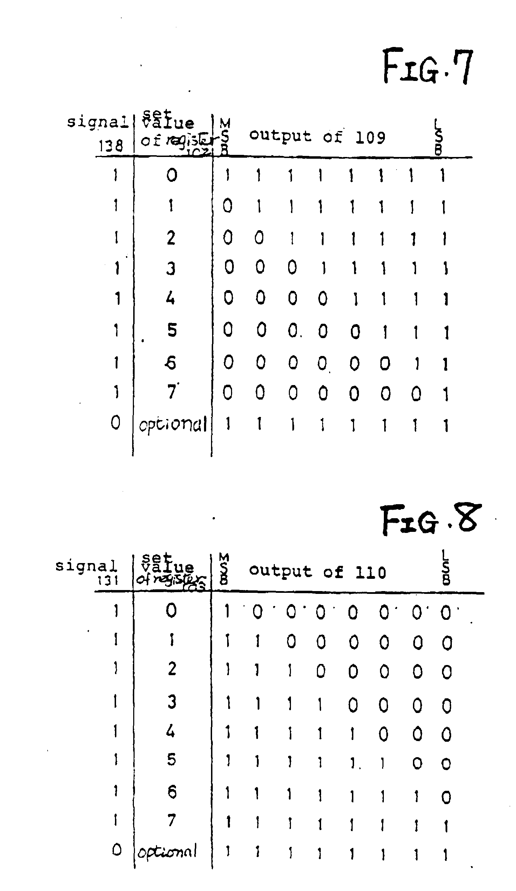

A comparator circuit 107 has a reference value that is set to "0", and produces a signal "1" when the count value of the counter 106 agrees with the reference value. A first step decoder 109 is enabled when the signal "1" is produced from the first comparator circuit 107 to generate data having a length of eight bits that increases stepwise from the most significant bit towards the least significant bit in accordance with the set value of the register 102 as shown in Figure 7. When not enabled, the first step decoder 109 may be arranged to produce the output "11111111".

For example, in the case that a mask quantity of "3" has been set into the register 102, the first step decoder generates the output "00011111".

A comparator circuit 108 compares the value in the register 101 with the count value of the counter 106, and produces the signal "1" when the two agree with each other. If they are not in agreement, the signal "0" is produced.

A second step decoder 110 is enabled when the signal "1" is produced from the second comparator circuit 108, and produces data having a length of eight bits that increases stepwise from the least significant bit towards the most significant bit in accordance with the set value of the register 103 as shown in Figure 8. When not enabled, i.e. when the count value of the counter 106 is not in agreement with the value in the register 101, the second step decoder 110 optionally produces the output "11111111". An AND gate 111 produces the logical product of the outputs from the first step decoder 109 and the second step decoder 110, for example in the present instance "00011111" which is the output of the first step decoder 109.

A selector 114 receives the signal from the AND gate 111 and transmits an output from an AND operation unit 113 for each bit position in which the signal from the AND gate 111 is a "1", and causes a signal representing image data stored in the register 105 to be produced in respect of each bit position which displays the signal "0". In this instance therefore, since the AND gate 111 produces the signal "00011111", the selector 114 produces the data stored in the register 105 for the most significant three bits and produces a signal from the AND operation unit 113 for the least significant five bits.

As the first byte is thus processed and the data of a second byte is then input, the counter 106 is incremented by 1. Therefore, the first and second comparator circuits 107 and 108 both produce the signals "0". Both the first and second step decoders 109 and 110 thus become inoperative and produce the output "11111111". The AND gate 111 produces the signal "1" for every bit and the selector 114 selects the output of the AND operation circuit 113 and supplies it to the image data processing memory region of the memory 57. When the processing is finished for the second byte, the counter 106 is again incremented by 1, and the above-mentioned steps are repeated.

The first and second comparator circuits 107 and 108 produce the signal "0" up to the fifth byte, and the selector 114 transmits the signal of the AND operation circuit 113, i.e. produces the signal of the data bus 69. Since the data of the data bus 69 is produced directly from the second byte to the fifth byte, no masking takes place.

After the processing up to the fifth byte is completed, the count value of the counter 106 becomes "5" which accords with the set value of the register 101, and the second comparator circuit 108 produces the signal "0". The second step decoder 110 produces a mask pattern "11111100" selected according to the set value of the register 103. The selector 114 selectively produces the data from the data bus 69 for the most significant six bits, and selectively produces the data from the register 105 for the least significant two bits.

As a result of such processing, the data for one line is converted as described below. Namely, the first byte is converted into "10101011" (AB in hexadecimal notation) and "00001011" (OB in hexadecimal notation). The second byte "11001101" (CD in hexadecimal notation), and the third byte "11101111" (EF in hexadecimal notation), the fourth byte "00000001" (01 in hexadecimal notation), and the fifth byte "00100011" (23 in hexadecimal notation) are not converted. The sixth byte "01000101" (45 in hexadecimal notation) is converted into "01000000".

That is, a blank of three bits is formed at the right and left hand sides. The above-mentioned operation is hereinafter repeated a required line number of times.

Then, the data can be written to the image data processing memory region simultaneously with the reading of data from the work memory region of the memory 57 while executing the masking. Therefore, no extra working time is required by the central processing unit, and the masking processing and the data transfer are carried out at high speeds.

As described above, in the present invention an expensive dual ported memory is not required, a cheap one port memory can be used instead and, further, the work memory region and the image data processing memory region are constituted by a common memory. Namely, the same memory can be flexibly used for the work memory region and the image data processing memory region, and can hence be used efficiently.

Furthermore, the present invention is conveniently equipped with means for transmitting data from the data bus to image data conversion means in synchronism with the image data read signals from the central processing unit. Therefore, the image data is sent to the image data conversion means from the central processing unit without passing through write steps, and the image data can be read at high speeds.

## Claims

1. A printer device including a memory and a central processing unit (50) for processing the print data said printer device being characterised by a main memory (57) consisting of a first memory region (91) and another memory region (90), first and second memory means (80, 81) for storing data representing a head address and a tail address received via a data bus (69) of said central processing unit (50), first and second comparator means (82, 83) for comparing the head address data and the tail address data stored in said first and second memory means with address data received via an address bus (60) of said central processing unit, and means (84, 85) for accessing either said first memory region (91) of the main memory specified by said head address and said tail address, said first memory region (91) being an image data processing memory region, or said other memory region (90) of the main memory (57), said other memory region being a work memory region, in response to a signal from said comparator means, wherein access to the other memory region (90) is blocked when said first memory region (91) is accessed, and access to the first memory region (91) is blocked when said other memory region (90) is accessed.

2. A printer device according to claim 1, further characterised by means for transmitting data from the data bus (69) to image data conversion means (53) in response to image data read signals from said central processing unit (50).

3. A printer device according to claim 1 or 2, characterised in that the main memory is a one-port random access memory.

4. A printer device as claimed in any preceding claim wherein the image data conversion means (53) comprises a parallel series converter means (53) and characterised by a light beam write control mechanism (19) arranged to receive data from the main memory via the parallel series converter means (53)

5. A printer device as claimed in any preceding claim characterised in that the image data processing region (91) comprises at least two memory portions (92 and 93).

6. A printer device as claimed in claim 4 or 5 characterised in that a large capacity image data processing memory is maintained in the memory (57) by means of address data stored in first and second memory circuits (80, 81).

7. A printer device as claimed in claim 6 characterised in that the parallel series converter circuit (53) is arranged to detect when the central processing unit (50) produces address data on the address bus (60), and is arranged to read data on the data bus (69), at a predetermined interval after the data is read out from the memory by the central processing unit (50).

## Patentansprüche

1. Druckervorrichtung, umfassend einen Speicher und eine zentrale Verarbeitungseinheit (50) zum Verarbeiten der Druckdaten, wobei die Druckervorrichtung gekennzeichnet ist durch einen Hauptspeicher (57), bestehend aus einem ersten Speicherbereich (91) und einem weiteren Speicherbereich (90), erste und zweite Speichermittel (80, 81) zum Speichern von Daten, welche eine über einen Datenbus (69) der zentralen Verarbeitungseinheit (50) empfangene Kopf-Adresse und eine End-Adresse wiedergeben, erste und zweite Vergleichsmittel (82, 83) zum Vergleichen der Kopf-Adreßdaten und der End-Adreßdaten, welche in den ersten und zweiten Speichermitteln gespeichert sind, mit über einen Adreßbus (60) der zentralen Verarbeitungseinheit empfangenen Adreßdaten, und ein Mittel (84, 85) zum Zugriff entweder auf den ersten Speicherbereich (91) des Hauptspeichers, welcher durch die Kopf-Adresse und die End-Adresse spezifiziert ist, wobei der erste Speicherbereich (91) ein Bilddatenverarbeitungs-Speicherbereich ist, oder auf den anderen Speicherbereich (90) des Hauptspeichers (57), wobei der andere Speicherbereich ein Arbeitsspeicherbereich ist, in Antwort auf ein Signal von den Vergleichsmitteln, worin der Zugriff auf den anderen Speicherbereich (90) blockiert ist, wenn auf den ersten Speicherbereich (91) zugegriffen wird, und der Zugriff auf den ersten Speicherbereich (91) blockiert ist, wenn auf den anderen Speicherbereich (90) zugegriffen wird.

2. Druckervorrichtung nach Anspruch 1, gekennzeichnet durch ein Mittel zum Übertragen von Daten von dem Datenbus (69) zu einem Bilddaten-Wandlermittel (53) in Antwort auf Bilddaten-Lesesignale von der zentralen Verarbeitungseinheit (50).

3. Druckervorrichtung nach Anspruch 1 oder 2, dadurch gekennzeichnet, daß der Hauptspeicher ein Einfach-Anschluß-Direktzugriffsspeicher ist.

4. Druckervorrichtung nach einem der vorhergehenden Ansprüche, worin das Bilddaten-Wandlermittel (53) ein Parallel-Seriell-Wandlermittel (53) umfaßt, und gekennzeichnet durch einen Lichtstrahlschreibe-Steuermechanismus (19), welcher zum Datenempfang von dem Hauptspeicher über das Parallel-Seriell-Wandlermittel (53) eingerichtet ist.

5. Druckervorrichtung nach einem der vorhergehenden Ansprüche, dadurch gekennzeichnet, daß der Bilddatenverarbeitungsbereich (91) wenigstens zwei Speicherabschnitte (92 und 93) umfaßt.

6. Druckervorrichtung nach Anspruch 4 oder 5, dadurch gekennzeichnet, daß ein Bilddatenverarbeitungsspeicher mit großer Kapazität in dem Speicher (57) durch Adreßdaten beibehalten wird, welche in den ersten und zweiten Speicherschaltungen (80, 81) gespeichert sind.

7. Druckervorrichtung nach Anspruch 6, dadurch gekennzeichnet, daß die Parallel-Seriell-Wandlerschaltung (53) dazu eingerichtet ist, zu erfassen, wann die zentrale Verarbeitungseinheit (50) an dem Adreßbus (60) Daten erzeugt, und dazu eingerichtet ist, Daten an dem Adreßbus (69) bei einem vorbestimmten Intervall, nachdem die Daten durch die zentrale Verarbeitungseinheit (50) aus dem Speicher ausgelesen worden sind, zu lesen.

## Revendications

1. Dispositif d'imprimante comprenant une mémoire et ne unité centrale de traitement (50) pour traiter les données d'impression, ledit dispositif d'imprimante étant caractérisé par une mémoire principale (57) constituée par une première zone de mémoire (91) et par une autre zone de mémoire (90), des premier et second moyens formant mémoire (80, 81) pour stocker des données représentant une adresse de tête et une adresse de queue reçues par l'intermédiaire d'un bus de données (69) de ladite unité centrale de traitement (50), des premier et second moyens formant comparateurs (82, 83) pour comparer les données d'adresse de tête et les données d'adresse de queue stockées dans lesdits premier et second moyens formant mémoire aux données d'adresse reçues par l'intermédiaire d'un bus d'adresses (60) de ladite unité centrale de traitement, et des moyens (84, 85) pour accéder soit à ladite première zone de mémoire (91) de la mémoire principale spécifiée par ladite adresse de tête et ladite adresse de queue, ladite première zone de mémoire (91) étant une zone de mémoire de traitement de données d'image, ou à ladite autre zone de mémoire (90) de la mémoire principale (57), ladite autre zone de mémoire étant une zone de mémoire de travail, en réponse à un signal en provenance dudit moyen formant comparateur, dans laquelle l'accès à l'autre zone de mémoire (90) est bloqué lorsqu'on accède à ladite première zone de mémoire (91), et dans lequel l'accès à la première zone de mémoire (91) est bloqué lorsqu'on accède à ladite autre zone de mémoire (90).

2. Dispositif d'imprimante selon la revendication 1, caractérisé, de plus, par un moyen pour transmettre des données en provenance du bus de données (69) à un moyen de transformation de données d'image (53) en réponse à des signaux de lecture de données d'image en provenance de ladite unité centrale de traitement (50).

3. Dispositif d'imprimante selon la revendication 1 ou 2, caractérisé en ce que la mémoire principale est une mémoire à accès direct à un seul accès.

4. Dispositif d'imprimante selon l'une quelconque des revendications précédentes, dans lequel le moyen de transformation de données d'image (53) comprend un moyen formant convertisseur parallèle/série (53) et caractérisé par un mécanisme de commande d'écriture de faisceau de lumière (19) conçu pour recevoir des données en provenance de la mémoire principale par l'intermédiaire du moyen formant convertisseur parallèle/série (53).

5. Dispositif d'imprimante selon l'une quelconque des revendications précédentes, caractérisé en ce que la zone de traitement de données d'image (91) comprend au moins deux parties de mémoire (92 et 93).

6. Dispositif d'imprimante selon la revendication 4 ou 5, caractérisé en ce qu'une mémoire de traitement de données d'image de grande capacité est maintenue dans la mémoire (57) au moyen de données d'adresse stockées dans les premier et second circuits de mémoire (80, 81).

7. Dispositif d'imprimante selon la revendication 6, caractérisé en ce que le circuit de conversion parallèle/série (53) est conçu pour détecter le moment où l'unité centrale de traitement (50) produit des données d'adresse sur le bus d'adresse (60), et est conçu pour lire des données sur le bus de données (69), à un intervalle prédéterminé après que les données ont été lues depuis la mémoire par l'unité centrale de traitement (50).
